# EUROPEAN PATENT APPLICATION

(11) **EP 1 557 759 A1**
(43) Date of publication of application: **27.07.2005**
(21) Application number: 05397002.6
(22) Date of filing: 20.01.2005
(51) Int. Cl.: G06F 9/445, G06F 9/40

(54) **System and method for dynamically adding features to software applications**

(30) Priority: 21.01.2004 US 762051
(71) Applicant: Nokia Corporation, 02150 Espoo (FI)
(72) Inventor: Pärnänen, Matti, 33720 Tampere (FI); Laaksonen, Jari, 33720 Tampere (FI); Rosendahl, Sami, 00950, Helsinki (FI); Mansikkamäki, Harri, 02130 Espoo (FI)
(74) Representative: Pursiainen, Timo Pekka

(57) **Abstract**

A method, device, system, and a computer program product where features are dynamically added to software applications. These applications are added using a framework for a general unchangeable application programming interface (API) that adds any feature to any application.

## Description

### FIELD OF THE INVENTION

The present invention relates to adding software application features to a device.

### BACKGROUND OF THE INVENTION

Terminal software products are available that enable terminal manufacturers to create application-driven phones. The Series 60 Platform available from Nokia Corporation of Finland is an example of a terminal software product that can be licensed by terminal manufacturers.

A manufacturer that desires to make a phone (or other similar device) using a terminal software product includes various associated applications with the terminal software product. The manufacturer can also include user interface elements that have been customized by the manufacturer, add new applications or remove old ones. Further, a user purchasing such a phone can install third party software on the phone.

Typically, an application provides the functionality for a feature that is visible to an end user in a pre-defined shell application. The application menu and other user interface elements, like soft key buttons or selection lists, offer sets of choices or data available per feature. Nevertheless, manufacturers, end users, and third party developers cannot easily extend terminal software product applications with their own features in such way that extensions look integrated for a seamless end user experience. Feature specific menu items (or other user interface elements) may not look and behave as if they were part of the terminal software product applications. Conventionally, to add a new feature into a phone means adding a new application, which generally leads to many applications doing the same kinds of things which are not necessarily consistent with each other.

Prior attempts at solving these problems have failed. For example, prior attempts have included implementing an application programming interface (API) for each feature. In such a system, an API is specified for each feature. Client applications needing the features are given a dependency to the API corresponding to the feature. Feature-specific UI elements are added to the client. Additionally, feature-specific UI elements can be added. Another attempt at solving the problems above includes adding feature-specific UI elements beforehand and using a run-time variation of the elements. Such a system contains all the features beforehand and features are activated/deactivated depending on the product configuration.

Nevertheless, these techniques typically cause static dependencies in software architecture, resulting in integration problems with phone development programs.

In any software development (including programming for terminal software products such as those described above), developers create a software architecture, map requirements to subsystems and components, and define functional and non-functional software requirements for the created architecture. Key components of these architectures are application programming interfaces (APls), which represent interfaces via which another component, referred to as a caller, utilizes or calls another component, referred as callee.

To add a functionality into existing software, a new component is integrated into an existing application via the API the callee offers for others to use. In general, the API consists of set of declarations and definitions, e.g. constant declarations, type definition, class definitions, function (procedure) definition. Each function definition has a unique signature which consists of the return type, function name, and list of function arguments. Each argument defines a piece of data that is passed into a function or program. The data type that the argument can hold can be simple, like string, byte, integer, real, double, or structural reference to structure or class definition.

Standard, multi-purpose APls may be needed in software development which is kept unchanged and generic enough over software evolution. Into such APls, developers want to implement generic, multipurpose functions which take simple data types, such as Int genericDoSomething (const char[ ] objectInformation), for example. However, it can be difficult to implement generic functions which can accept many kind of parameters. The function can be separated into pieces to have separate variants. For example, the function can be defined as follows:
1) Int genericDoSomething (const char[ objectName);
2) Int genericDoSomething (const char[ ] objectld);
2B) Int genericDoSomethingByName (const char[ ] objectName);
2C) Int genericDoSomethingByld (const char[ ] objectId);
3) Int genericDoSomething (const char[ ] objectName, const char[] objectUrl);
4) Int genericDoSomething (const char[ ] objectName, const char[] objectID, char * objectUrl);
5) Int genericDoSomething (const char[ ] objectName, char[ ] outObjectInfo);

In all these versions, the callee assumes the meaning or semantics of each argument position. However, the callee must trust the caller and assume that the first input parameter is correct. The callee has no good way verify this. Alternatives 1) and 2) (above) are not possible because the signature of the function is not unique and the compiler cannot resolve the function call. Functions 2B) and 2C) are needed to resolve the function call.

When a callee passes an input parameter on to other functions, it delegates this trust onwards. After many layers of function calls, semantics may be lost and there is a risk that the argument is mis-understood.

If new arguments are added to a function, the signature of the function must be altered every time. Careless change might cause binary or source compatibility breaks. For example, in cases 3) and 4), additional objectID and objectUrl arguments are added. In case 5), if the callee returns data in output argument outObjectInfo, the caller faces similar problems with the input parameters. If the input argument is saved persistently into a file, the meaning of the argument is lost. If the input argument is passed across process boundaries, the meaning of the argument is lost.

As mentioned above, it is possible to use specific function variants instead of a generic form. Semantic information can be added to an argument, such as "Int genericDoSomething (int objectInfoMeaning, const char[ ] objectInformation)." This applies to each additional argument passed in the same call (e.g., "Int genericDoSomething (int objectInfoMeaning1, const char[ ] objectInformationl, int objectInfoMeaning2, const char[ ] objectInformation2);"). The structures could be simplified (e.g., "Int genericDoSomething(struct ObjectInfo1 info, struct ObjectInfo2 info)"). Here, the structure "struct ObjectInfo1" holds the information as member data. In such a structure, the compiler checks semantics of the arguments.

Alternatively, classes can be used (e.g., "Int genericDoSomething(ObjectInfo1 info, ObjectInfo2 info);") where Object1 and Object2 are C++ classes which hold semantic information automatically. As such, the compiler checks semantics of the arguments. However, new arguments need to be added in a similar manner. Also, a genericDoSomething method can be added as a member function to the Object1 class to get object1.genericDoSomething(Object2 &info).

Another known technique (e.g. in Microsoft OLE2) is the usage of variant data type which can hold several data representations (see next section). But it still lacks the semantic information.

To pass parameters from a consumer to one or many matched providers through the same consumer API, a generic parameter with semantic and data information can be created. Each consumer can, for example, then check the semantic meaning and data type, and make necessary conversion if needed. Parameters should be generic because it is difficult to know what type of data is passed through the API.

Thus, there is a need for providing a mechanism for adding features to an existing group of applications in a controlled and dynamic way. Even further, there is a need to add features into existing applications to extend the functionality of terminal software product applications. Yet further, there is a need for generic function arguments.

### SUMMARY OF THE INVENTION

The present invention is directed to a method, device, system, and a computer program product where features are added dynamically to a software application. These features are added using a framework for a general unchangeable application programming interface (API) that adds any feature to any application.

Briefly, one example embodiment relates to a method for adding computer software features dynamically to a software application by establishing a framework for a general, unchangeable application programming interface (API) that adds any feature to any application. The method includes providing a consumer application interest resource for a consumer application specifying desired user interface elements, storing the desired user interface elements corresponding to the consumer application interest resource in a file, communicating the desired user interface elements to an application interworking framework, and adding the desired user interface elements to a user interface associated with the software application.

Another example embodiment relates to a device that adds features dynamically to a software application such that any feature provided by a software program can be added to a software platform program for the device. The device includes a new consumer application that publishes a feature interest indicating what features the new consumer application desires to have. The new consumer application provides user interface resources needed with interest placeholders for needed user interface features based on the feature interest. The device further includes multiple provider applications that have features and user interface resources available for the feature, and an application interworking framework that provides an interface for the new consumer application and the multiple provider applications such that the feature interest is matched with one of the features available from the multiple provider applications. The user interface elements corresponding to the matched feature are added from one of the multiple provider applications to the new consumer application.

Yet another example embodiment relates to a system for adding features dynamically to a software application. The system includes a consumer application that publishes a feature interest and identifies user interface resources needed based on the feature interest, a provider application that publishes a provider capability and identifies user interface resources available for a feature, and an application interworking framework that provides an interface for the consumer application and the provider application such that the feature interest is matched with the provider capability and the user interface elements are added from the provider application to the consumer application.

Even another example embodiment relates to a computer program product that has computer code to provide a consumer application interest resource for a consumer application specifying desired user interface elements, store the desired user interface elements corresponding to the consumer application interest resource in a file, communicate the desired user interface elements to an application interworking framework, and add the desired user interface elements to a user interface.

Other principle features and advantages of the invention will become apparent to those skilled in the art upon review of the following drawings, the detailed description, and the appended claims.

### BRIEF DESCRIPTION OF THE DRAWINGS

Example embodiments will hereafter be described with reference to the accompanying drawings.

FIG. 1 is a diagrammatic representation of a software architecture to dynamically add features to software applications in accordance with an example embodiment.

FIG. 2 is a diagrammatic representation of example user interfaces in accordance with an example embodiment.

FIG. 3 is a flow diagram depicting operations in a process of dynamically adding features to software applications in accordance with an example embodiment.

FIG. 4 is a diagrammatic representation of a generic parameters implementation in accordance with an example embodiment.

FIG. 5 is a block diagram of a device according to an example embodiment.

### DETAILED DESCRIPTION OF EXAMPLE EMBODIMENTS

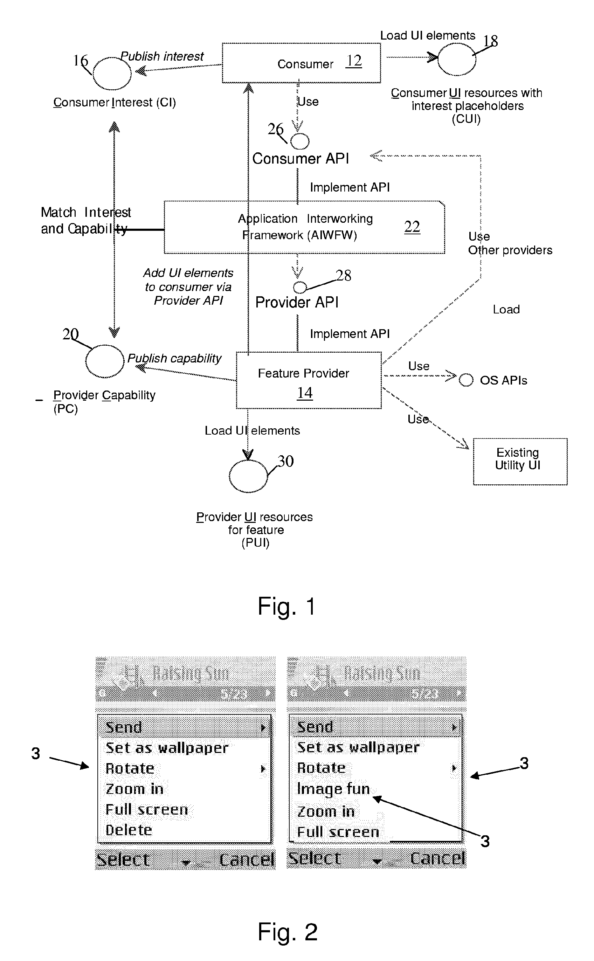

FIG. 1 illustrates a software architecture to dynamically add features to software applications. A consumer application 12 indicates features available from feature providers 14 that the consumer application 12 has interest in by publishing a consumer interest 16. The consumer application 12 specifies the user interface (UI) element templates in a consumer UI resource file 18 and the feature providers 14 add the desired UI elements to the UI at run time.

In the situation where there is a feature provider 14 capable of fulfilling the published interest of the consumer application 12, the feature provider 14 adds UI elements to the UI at run time. Further, the feature provider 14 handles related business logic.

The consumer interest 16 and a provider capability 20 published by the feature provider 14 are expressed in the same, specified format. In an example embodiment, this format includes multi-purpose Internet mail extensions (MIME) or Internet data, commands, and a provider interface. The consumer interest 16 and the provider interest 20 can include wild-cards patterns, which allows for more flexible resolving for the feature providers 14.

The data agreement between the consumer application 12 and the feature provider 14 to permit the communication of parameters from consumer to provider and vice versa. The data agreement can be static or it can be negotiated at run time. One consumer application 12 can use many providers and one feature provider 14 can fulfill many consumers' interests. The feature provider 14 can also be a consumer for other providers. The consumer application 12 and the feature provider 14 are as independent as possible from each other. The feature provider 14 can be loaded only from read-only memory (ROM) or also from user data area (installable providers).

By way of example, the cases shown in Table 1 below are examples of the use of the software architecture described with reference to FIG. 1. Each example has an application, a consumer, an interest, and a provider.

**Table 1**

| Application | Consumer | Interest | Provider |
|---|---|---|---|
| Edit image | Image Viewer, Media Gallery | "Edit command" + MIME type (image/jpeg) | Image Fun |
| "Select application or function to be launched" | Softkey selector, Voice commands, Pinboard, Active Desk | "Select command" + MIME type (application object) | Application / Application manager |
| "Offer command options for found items in a text" | Browser, Messaging applications, Calendar, Notebook, ... | "Edit/View command" + Item(phone number, email address, URL, ...) | Browser, Phone, Phonebook, SMS Editor, MMS Editor, EMail Editor... |
| Fetch new image, audio, file Table 1 | MMS Editor, Media Gallery | "New command" + MIME type (image/*, sound, video,file) | Camera, CamCorderMedia Gallery |

Thus, as shown in Table 1, the application "Edit image" has a consumer application of "Image Viewer" and "Media Gallery." Further, the corresponding consumer interest is "Edit command" and MIME type and the corresponding provider is "Image Fun." FIG 2 illustrates user interfaces in the case of an edit image application. In user interface 34, a new image fun feature 36 is added to an existing application menu in user interface 32. The addition of the new feature 36 is done in a seamless manner. As such, it seems to the user that the new feature is just another feature of Image viewer application.

Referring again to FIG. 1, the consumer application 12 owns a normal UI element in the consumer UI resource file 18. The consumer UI resource file 18 can include a consumer interest therein. Moreover, separate resource files are used to create collections of common interests or common interest "libraries." Wanted interests (e.g., menu commands, settings pages) can be inserted into wanted UI elements in the consumer UI resource file 18.

An Application Interworking Framework (AIWFW) 22 assures that the feature provider 14 can add provider UI elements 24 only in places where UI designers define UI elements. The AIWFW 22 establishes a connection between the consumer application 12 and the feature provider 14. The AIWFW 22 makes this connection by matching published consumer interests 16 with published provider interests 20. These connections can be pure dynamic link library (DLL) function calls from the consumer application 12 to a dynamically-loaded provider DLL, or they can have an inter-process communication (IPC) connection from consumer process to provider process. In an example embodiment, dynamically loaded DLLs are used to avoid too many context switches between processes.

The AIWFW 22 implements two APIs: one consumer API 26 for consumers to use providers and set of provider APIs 28 to implement providers. Feature providers 14 can implement only APIs that match their UI capability, e.g. base interface, menu service interface, settings interface, etc. The set of interfaces can be extended upon demand.

In operation, an interest is provided to the AIWFW 22. Based on data agreement, the consumer application 12 gives optional input parameters to the feature provider 14 and expects output parameters back, if feasible. The default formats of input and output parameters are sufficient in most cases.

Each feature provider 14 implements supported interfaces of the provider APIs 28. The AIWFW 22 offers default implementation for each interface. A first task for the feature provider 14 is to communicate to the consumer application 12 needed feature's UI elements from a provider resource file (PUI) 30, like menu items. A second task is to handle commands related to the added elements which appear in an integrated manner in the consumer resource file 18 along with native consumer items. A third task is to fulfill a data agreement, such as a default agreement.

The feature provider 14 uses any existing operating system APls, user interface (UI) utilities etc. to help in implementation. The AIWFW 22 helps to implement feature providers easily in order to wrap-up existing, tested, software in the form of a feature provider. From a security point, "Load-only-from-ROM" can be supported to restrict key providers to be non-patchable from user data area.

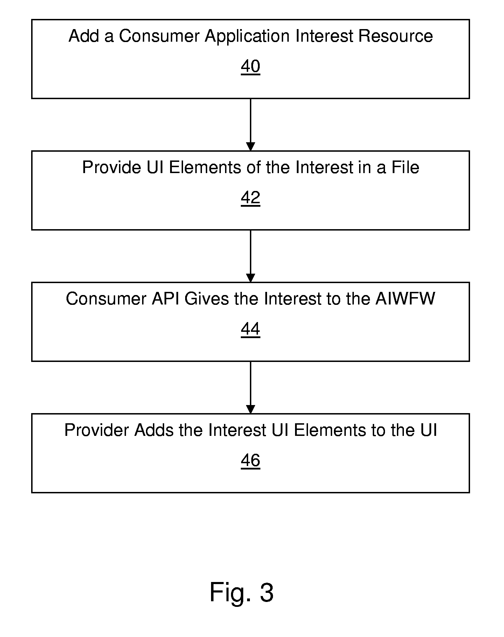

FIG. 3 illustrates example operations performed in the dynamic addition of features to software applications process. Additional, fewer, or different operations may be performed, depending on the embodiment. In an operation 40, an interest resource is added for a consumer. The interest resource describes what features the consumer application desires.

In an operation 42, the user interface (UI) elements of the interest are provided into a resource file. Menu commands and settings pages are examples of the UI elements designated by the contents of the resource file. In an operation 44, a consumer application programming interface (API) provides the consumer interest to the AIWFW. The AIWFW is the interface between the consumer and the feature provider. In an operation 46, the feature provider adds the needed interest UI elements from the AIWFW to the consumer applications UI at run time.

The example embodiments described with reference to FIGs. 1-3 extend applications in an integrated manner after the phone has been launched to market. The UI consistency of native platform applications can be maintained while specifying where additions in UI elements can take place. The whole platform becomes more interesting and customizable.

Accordingly, the platform configuration can be supported while creating different sales packages based on feature providers. At the same time, native applications can accept providers implemented afterwards by operators and 3rd developers.

From a software architecture point of view, many advantages can be seen. For example, maintenance and extension of features is easier. One feature provider can be customized and it impacts all the interested consumers in the similar manner. Thus, development costs are reduced. Moreover, architecturally static dependencies can be replaced with dynamic ones. This enables software configurations easier, e.g. implementing common core image and variant image concepts. Further, the example embodiments allow easier device integration for phone development due to the incremental model for integration based on features. This should save integration burden and costs. Even further, new features can be added to the consumer application without changing (editing the code of) the consumer application. This reduces required testing effort considerably, The AIFWW implements the Open/Closed principle of Object-Oriented software design which has many good properties.

Feature variation is easier with the example embodiments. The manufacturer can select wanted providers into ROM and visibility / invisibility in consumer Uls is consistent. Further, operators and third party developers can add their own providers afterwards, but phone manufacturer can control where that happens.

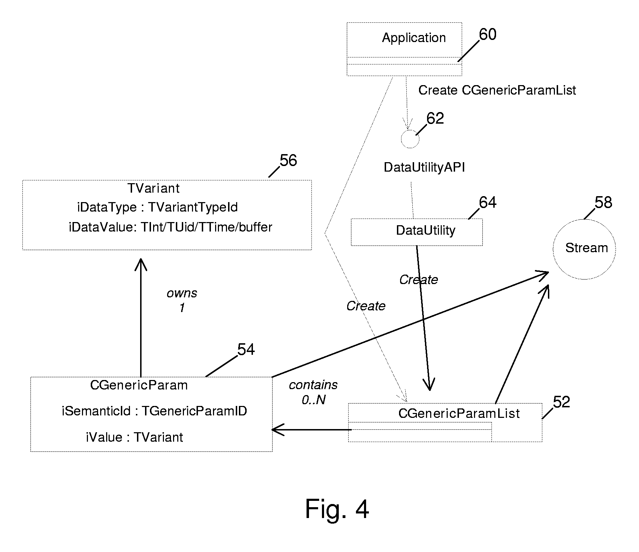

FIG. 4 illustrates a generic parameters implementation in accordance with an example embodiment. In this implementation, a variable called SemanticID is used to describe data, such as FILENAME, URL, MESSAGEID, CONTACTID, IMAGEFILE, IMAGEDATA, and IMAGEHANDLE needed by use cases. The ID has unique value. Closely related SemanticlDs can be grouped together to form group of alternative representations. For example, IMAGEFILE, IMAGEBUFFER, IMAGEDBHANDLE above can be grouped together to form IMAGE.

A variable called VariantTypeld is used to represent basic data types, such as integer, date/time, unique ID, string, real, double, and databuffer. TVariant can hold all the data types specified by VariantTypeld. A generic parameter GenericParam owns the following data attributes: SemanticlD, Tvariant, SemanticlDGroup, ParameterStatus (which holds status code for data checks), and other utility members for the generic parameter, e.g. originator application UID, version information, and error code. External and internal support for the GenericParam is included to write into a stream and to construct itself from a stream. A stream can represent any operating system stream (memory, file, socket, serial port, IPC channel, etc) which can be used communications needs inside mobile device or between mobile devices.

A list of generic parameters called GenericParamList is defined which owns one or more GenericParams. External and internal support for the GenericParamList to write into a stream and construct itself from the stream. GenericParamList can be used in every generic function needing consistent way to pass arguments:
Int genericDoSomething(GenericParamList inParams);
Int genericDoSomething(GenericParamList inParams,
GenericParamList outParams)

By way of example, the generic parameters implementation can be used to pass input and output arguments between terminal software product applications using application embedding (in-process communication). As such, the parameter's meaning (semantics) is understood no matter how deep the call stack is. The implementation can also pass input and output arguments between stand-alone terminal software product applications (process-to-process communication). As such, the semantics and origin of the argument are preserved.

Moreover, the generic parameters implementation can pass arguments within the Application Interworking Framework 22 described with reference to FIGs. 1-3 above. The AIWFW 22 can utilize the generic parameters to implement data flexible agreements. For example, a service provider command can be executed as follows:
void ExecuteServiceCmdL(
   const TInt aCmdId,
   const GenericParamList aInParamList,
GenericParamList aOutParamList);

As another example, the generic parameters implementation can be used for alternative representations of the semantically same data. For instance, an image container may be file, an identifier of an image database, or image data as memory buffer.

Referring now to FIG. 4, a CGenericParamList class 52 contains multiple (0..N) CGenericParam items 54. Each CGenericParam item 54 contains a TGenericParamlD and TVariant, which are part of a CGenericParam class. The CGenericParam class owns a TVariantTypelD data type class and various data values contained in a TVariant dass 56. The CGenericParamList class 52 and the CGenericParam class write to a stream 58 contained in an operating system. An application 60 creates the CGenericParamList class 52 using a Data Utility API 62 which interfaces with a data utility 64 in the creation process.

In an example embodiment of the creation of CGenericParamList class 52, various classes are defined and identifiers allocated. For example, a class called TGenericParamld is defined to represent SemanticID. The identifiers used in this class are allocated suitable ranges and made unique. A class called TVariantTypeld is defined to represent VariantTypeld. The identifiers used in this class are allocated suitable values and made unique. Variables are also defined for operating system types, such as TInt32, TUid, TTime, TDesC and HBufC. A class called TVariant is defined which owns TVariantTypeld and the actual data in the format above. Further, additional utility attributes are defined as member methods or as a CGenericParamList member.

A class called CGenericParam is defined which has a TGenericParamld data member (iSemanticld), a TVariant data member (iValue), a reserved member for extensions. External and internal methods are provided for the CGenericParam class to write itself into a stream and construct itself from a stream. A class CGenericParamList is defined for the GenericParamList. External and internal support is provided to the list class, too. Basic iterators are provided for listing or accessing the CGenericParamList. A module tester is provided for the classes.

In alternative embodiments, advanced iteration methods are provided for the class CGenericParamList to search the list by TGenericParamld and TVariantTypeld. The list can then contain alternative presentations of the same parameter. Further, semantic identifier groups can be implemented as range of TGenericParamlds. A semantic identifier can be converted using conversion utilities.

The example embodiments of the generic parameters implementation enable creation of generic service APls which allow handling several kinds of arguments without changing function signature. The embodiments also enable semantic checks on arguments checks within a call stack inside and outside process boundaries. A framework type of APls can apply consistency, security etc. checks based on semantic IDs or even replace one semantic ID with another, more suitable one.

A check can be made of the semanticlD and if needed, one semantic identifier can be converter to another. If RAM consumption is not a problem, caller can accept/create several alternative semantic IDs for same data (e.g. IMAGEFILE, IMAGEDATA, IMAGEHANDLE). Arguments can keep context information based on additional utility data.

If using in/out arguments, CGenericParamList can also be used as meta-data to describe data agreement required by callee. The caller fills the TVariant part of the data as actual output parameter. The CGenericParamList can be saved into any kind of stream and still keep the semantics in live. The generic parameters implementation extends existing APls by adding incrementally new semantic identifiers and preserving binary and data capability with earlier implementation.

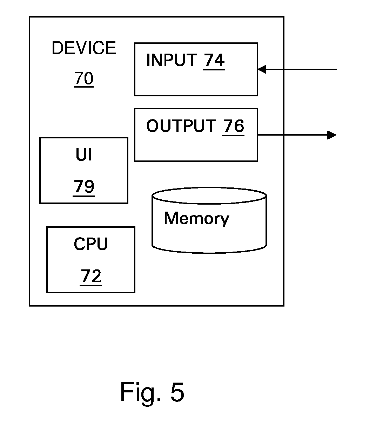

FIG. 5 illustrates a device 70 having a central processing unit (CPU) 72, an input 74, an output 76, a memory 78, and a user interface (UI) 79. The UI 79 can be configured with new features according to the example embodiments described with reference to FIGs. 1-4. The CPU 72 processes the instructions contained in the application interworking framework to interface a consumer application and a provider application. The device 70 can be a phone, a personal digital assistant (PDA), a computer, or any other device.

This detailed description outlines example embodiments of a method, device, system, and a computer program product for dynamically adding features to a software application. In the foregoing description, for purposes of explanation, numerous specific details are set forth in order to provide a thorough understanding of the present invention. It is evident, however, to one skilled in the art that the example embodiments may be practiced without these specific details. In other instances, structures and devices are shown in block diagram form in order to facilitate description of the example embodiments.

While the example embodiments illustrated in the Figures and described above are presently preferred, it should be understood that these embodiments are offered by way of example only. Other embodiments may include, for example, different techniques for performing the same operations. The invention is not limited to a particular embodiment, but extends to various modifications, combinations, and permutations that nevertheless fall within the scope and spirit of the appended claims.

## Claims

1. A method for adding computer software features dynamically to a software application by establishing a framework for a application programming interface (API) that adds a feature to an application, the method comprising:
- requesting from an application interworking framework a feature matching a consumer interest of a consumer application;
- using the consumer interest and a feature capability to identify a provider;
- providing the feature, if the provider is identified, to the consumer application; and
- utilizing the feature at the consumer application.

2. The method of claim 1, further comprising using generic parameters in application interworking framework application programming interfaces (APIs).

3. The method of claim 1, wherein the application interworking framework interfaces the consumer application with the feature provider.

4. The method of claim 3, wherein the application interworking framework interfaces the consumer application with the feature provider using dynamic link library (DLL) function calls.

5. The method of claim 1, further comprising adding a feature user interface element along with the feature.

6. The method of claim 5, wherein the feature user interface element comprises menu commands and a setting page or other user interface elements.

7. The method of claim 5, wherein the application interworking framework implements two application programming interfaces (APls), including a consumer API and a set of provider APls, wherein the provider APls match the desired user interface elements.

8. A device that adds features dynamically to a software application such that a feature provided by a software program can be added to a software platform program for the device, the device comprising:
- a consumer application that publishes a feature interest indicating what features the said consumer application desires to have;
- at least one provider application that has at least one feature available; and
- an application interworking framework that provides an interface for the said consumer application and the said provider application such that the said feature interest is matched with one of the features available from the said provider application.

9. The device of claim 8, wherein the new consumer application is an application provided by a terminal manufacturer.

10. The device of claim 8, wherein the new consumer application is an application provided by a third party to a user of the device.

11. The device of claim 8, wherein the new consumer application integrates into the device as if part of an original group of software applications for the device.

12. The device of claim 8, wherein generic parameters are used in application interworking framework application programming interfaces (APls).

13. The device of claim 8, wherein the feature interest of the new consumer application comprises menu options not on the device before introduction of the new consumer application to the device.

14. The device of claim 8, wherein the user interface elements corresponding to the matched features are placed in the interest placeholders.

15. The device of claim 8, wherein the consumer application is a new consumer application.

16. The device of claim 8, wherein the at least one feature available is a user interface feature based on the feature interest.

17. A system for adding features dynamically to a software application, the system comprising:
- a consumer application that publishes a feature interest and identifies user interface resources needed based on the feature interest;
- a provider application that publishes a provider capability and identifies user interface resources available for a feature; and
- an application interworking framework that provides an interface for the consumer application and the provider application such that the feature interest is matched with the provider capability and the user interface elements are added from the provider application to the consumer application.

18. The system of claim 17, wherein the consumer application interfaces with the application interworking framework using an application programming interface (API).

19. The system of claim 17, wherein the consumer application obtains user interface elements from other providers.

20. The system of claim 17, wherein the client device is a mobile telephone.

21. A computer program product comprising: computer code configured to:
- provide a consumer application interest resource for a consumer application specifying at least one user interface element;
- store user interface element corresponding to the consumer application interest resource in a file;
- communicate said user interface element to an application interworking framework; and
- add said user interface element to the consumer user interface.

22. The computer program product of claim 21, further comprising computer code to generate a class of generic parameters.

23. The computer program product of claim 21, further comprising computer code to pass arguments within the application interworking framework.
